# EUROPEAN PATENT APPLICATION

(11) **EP 1 628 000 A1**
(43) Date of publication of application: **22.02.2006**
(21) Application number: 04735369.3
(22) Date of filing: 28.05.2004
(51) Int. Cl.: F01P 11/10, F01P 5/06, B60K 11/04, E02F 9/00

(54) **CONSTRUCTION MACHINE ENGINE ROOM CONSTRUCTION AND CONSTRUCTION MACHINE COOLING DEVICE**

(30) Priority: 28.05.2003 JP 2003151517
(71) Applicant: Shin Caterpillar Mitsubishi Ltd., Tokyo 158-0097 (JP)
(72) Inventor: SAKAI, Makoto, SHIN CATERPILLAR MITSUBISHI LTD., Tokyo, 1580097 (JP); YAMADA, Kyoko, SHIN CATERPILLAR MITSUBISHI LTD., Tokyo 1580097 (JP); SHIGEMOTO, T., SHIN CATERPILLAR MITSUBISHI LTD., Tokyo 1580097 (JP); YOKOTA, Kenichi, SHIN CATERPILLAR MITSUBISHI LTD., Tokyo 1580097 (JP); TANAKA, Hiroya, SHIN CATERPILLAR MITSUBISHI LTD., Tokyo 1580097 (JP); MIYAKE, Keiichi, SHIN CATERPILLAR MITSUBISHI LTD., Tokyo 1580097 (JP); YAMASHITA, Yasuo, c/o SEIRYO ENGINEERING CO., LTD., Kobe-shi, Hyogo 6520863 (JP)
(74) Representative: Klingseisen, Franz
(86) International application number: PCT/JP2004/007734
(87) International publication number: WO 2004/106708

(57) **Abstract**

The present invention related to an engine room structure and cooling system of a construction machine. To discharge the cooling air passed through a cooling package (24), the engine room main body (21) of an engine room (2B) has a top wall surface (22) with an upper discharge opening (22a) and a bottom wall surface (23) with a lower discharge opening (23a). At least the upper discharge opening (22a) is disposed around the outer periphery of acoolingfan (25). Anuppercooling-airdeflectingmember (22b or 32a) is mounted on the top wall surface (22) to cover the upper discharge opening (22a) so that the cooling air discharged from the upper discharge opening (22a) is deflected in a horizontal direction. As a result, most of the cooling air sent out of the cooling fan 25 flows in the centrifugal direction and an efficiency of cooling-air discharge can be enhanced.

## Description

### TECHNICAL FIELD

The present invention relates to the engine room structure and cooling system of a construction machine.

### BACKGROUND ART

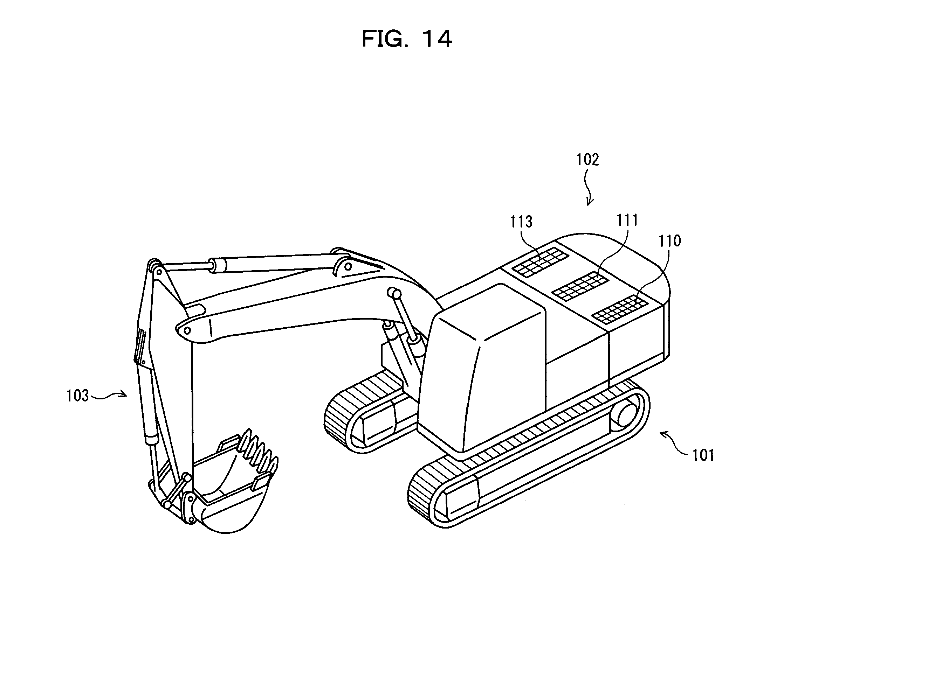

A wide variety of construction machines, such as travel construction machines (excavator, back hoe and wheel loader, etc.), stationary construction machines (folk-lift, crane, etc.), etc., are employed in various fields such as construction sites, harbors, factories, etc. For example, a hydraulic shovel, which is a travel construction machine, is made up of a travel base 101, a revolving superstructure 102 revolvably disposed on the travel base 101, and an operating arm 103 extending from the revolving superstructure 102 to perform various operations, as shown in Fig. 14.

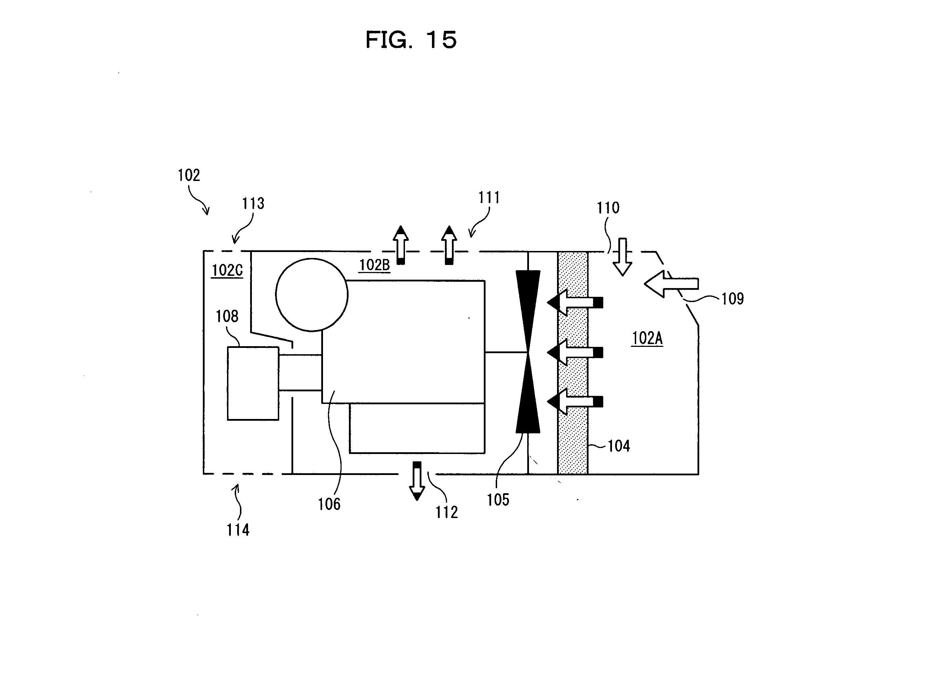

Now, the revolving superstructure 102 will be described with reference to Fig. 15 where the internal construction of a typical engine room is shown. As shown in the figure, the revolving superstructure 102 contains an engine 106, a hydraulic pump 108, etc. The operating arm 103 (see Fig. 14) is operated with the hydraulic pressure produced by the hydraulic pump 108 driven by the engine 106.

Construction machines are typically used in a severe environment, such as digging of stones and rocks in dams, tunnels, rivers, and roads, dismantling of buildings and structures, etc. In such an environment, the load exerted on the engine 106, hydraulic pump 108, and other components is high and can cause a rise in engine temperature or working-oil temperature. For this reason, in these construction machines, as shown in Fig. 15, a cooling package 104 consisting of a radiator or oil cooler of relatively large capacity is provided in the flow passage of the cooling air generated by the fan 105 driven with the engine 106. And with the cooling package 104, engine cooling water or working oil is cooled (e.g., see patent document 1 (Japanese Laid-Open Utility Model Publication No. Hei 3-83324)).

That is, with rotation of the fan 105, air (cooling-air) is introduced through the upper openings 109, 110 of a radiator room 102A in which the cooling package 104 is installed. The cooling air cools engine cooling water or working oil when passing through the core of the cooling package 104 of fin structure.

A main engine room 102B has an opening 111 in the top surface and an opening 112 in the bottom surface, at predetermined positions away from the fan 105 in the fan axial-flow direction(right-and-left directionin Fig. 15). The opening 111 consists of a plurality of openings arranged in the form of a mesh or louver and has a relatively great width in the above-described fan axial-flow direction.

In a pump room 102C in which the hydraulic pump 108 is installed, openings 113, 114 are formed in the top surface and bottom surface, respectively. These opening 113, 114 consist of a plurality of openings arranged in the form of a mesh or louver, as with the opening 111 of the main engine room 102B.

The air, cooling the engine cooling water and working oil and reaching a high temperature, is discharged out of the engine room through the discharge openings 111, 112 of the main engine room 102B, or passes through the main engine room 102B and is discharged out of the engine room through the discharge openings 113, 114 of the pump room 102C.

Particularly, in hydraulic shovels, it has been found that the air flow brought by the fan 105 to the main engine room 102B includes almost no component in the fan axial-flow direction and that the main components of the air flow are the components in the centrifugal direction and components in the revolving direction (hereinafter referred to as the components in the centrifugal/revolving direction).

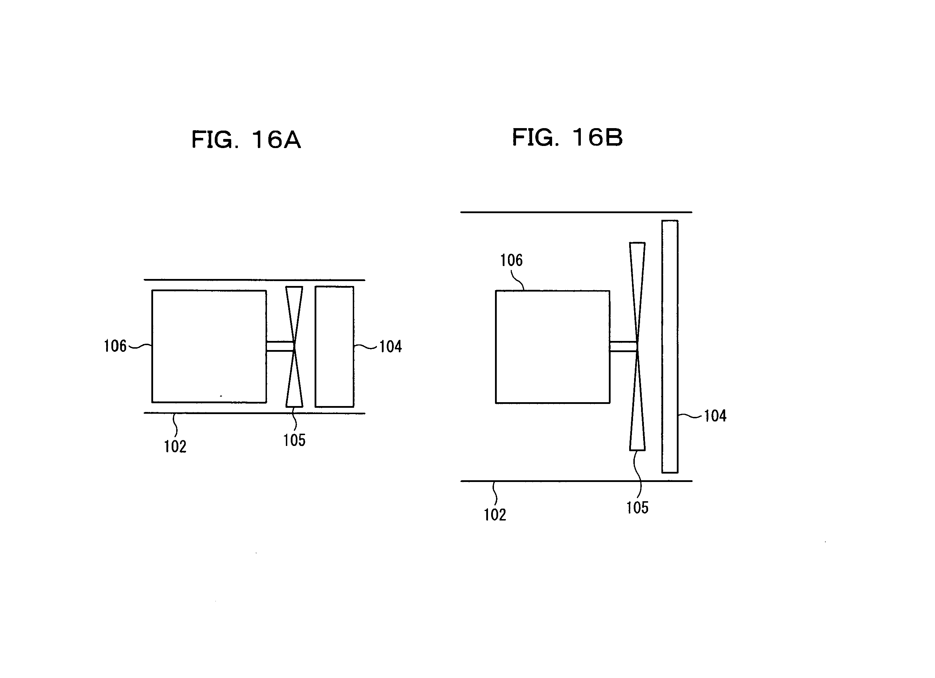

The reasons will hereinafter be described with reference to Figs. 16A to 19B.

In the case of the hydraulic shovel, the space that can mount a cooling package 104 and an engine 106 in the interior of the revolving superstructure 102 is as shown in Fig. 16A and narrow compared with the space of another construction machine shown in Fig. 16B. Particularly, the cross section perpendicular to the fan axial-flow direction is small. The reason is that if the height of the engine room is increased, the field of vision from a driver's seat in front of the engine room to the rear will be intercepted and that if the width in the fore-and-aft direction of the engine room becomes longer, the construction machine rear end will become great in turning radius and become inconvenient to use in a narrow site.

Thus, the cross section of the engine room in the hydraulic shovel is relatively small, so the thickness of the coolingpackage 104 is increasedtoassurethe contact area between the cooling package 104 and cooling air and consequently the cooling performance of the cooling package 104. As a result, the pressure resistance that the cooling air undergoes when passing through the cooling package 104 is relatively great.

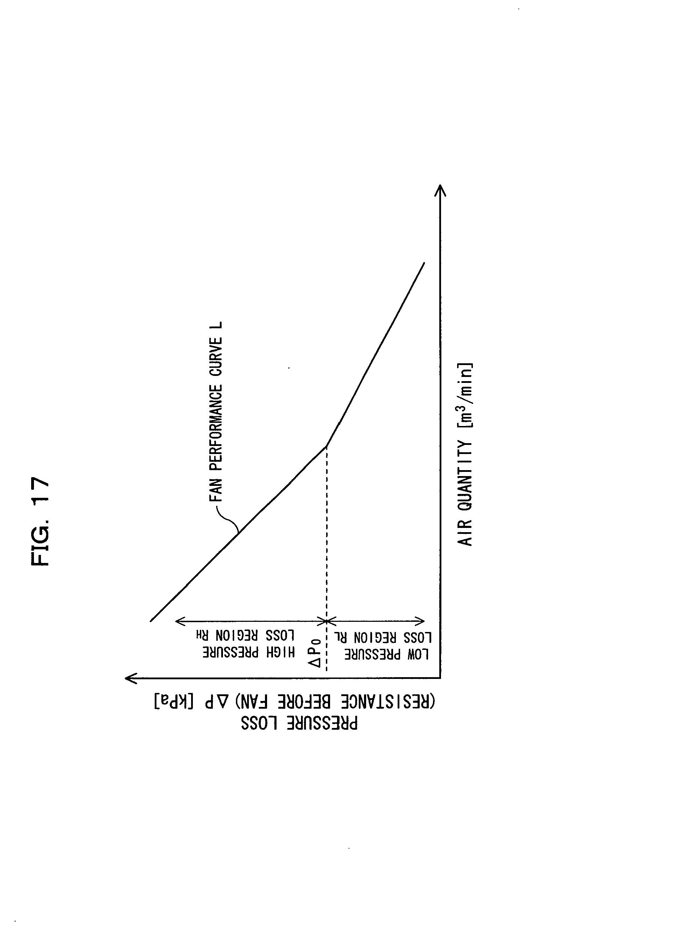

In construction machines, axial fans are typically used to suppress costs and an increase in size. Fig. 17 shows the performance curve of a typical axial fan. As seen in the performance curve L, in axial fans, if the pressure loss Δ P at the fan upstream side increases, an air quantity V per unit time tends to decrease. The air quantity V means an air quantity transferred from the fan upstream side to the fan downstream side, so if the pressure loss ΔP at the fan upstream side increases, an axial flow that is a straight flow from the fan upstream side to the fan downstream side is particularly hard to obtain.

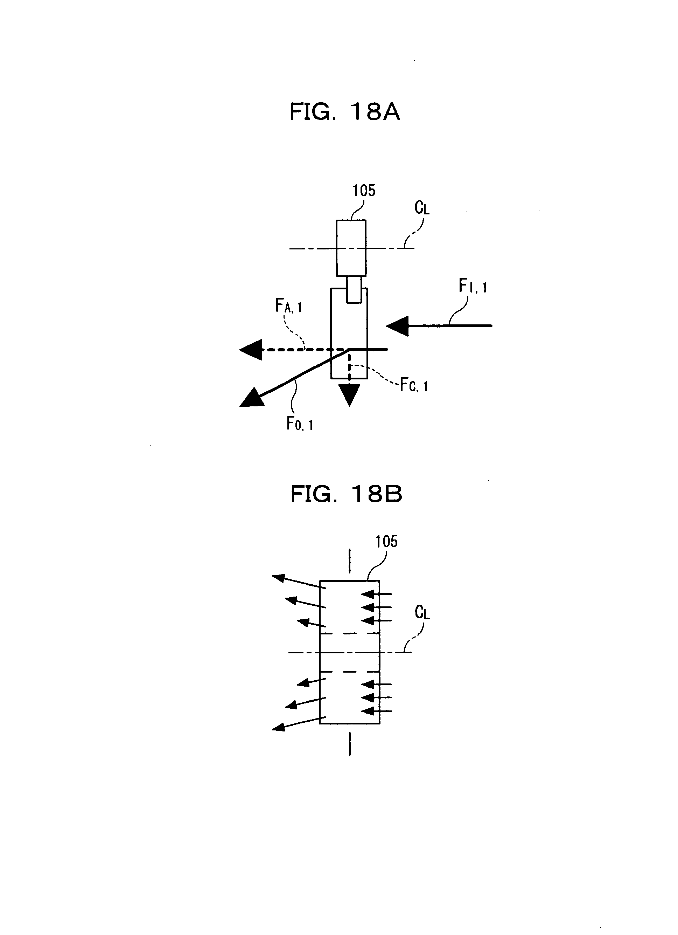

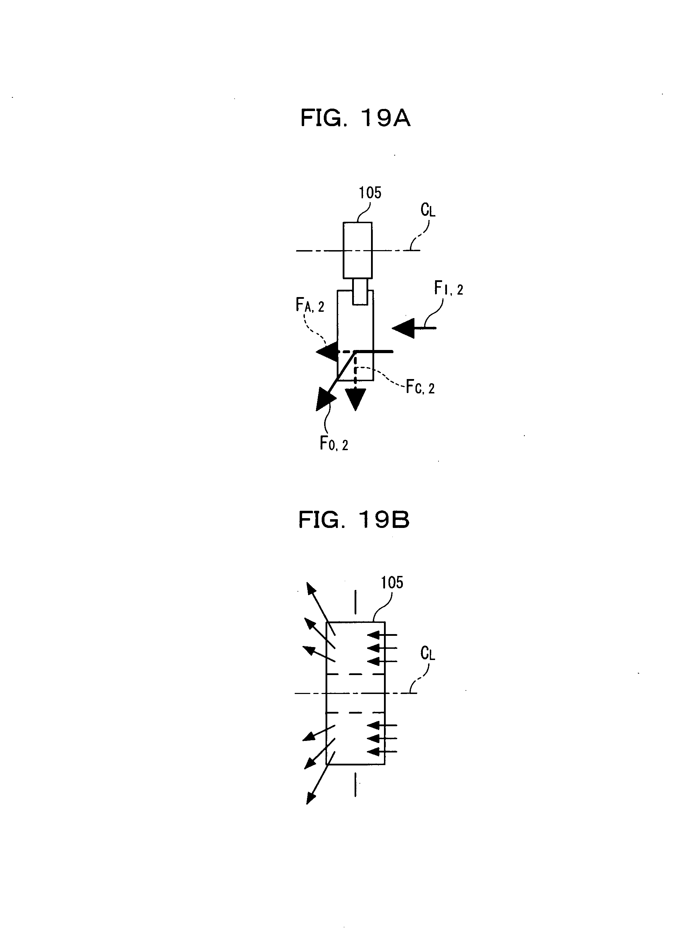

For that reason, when the pressure loss ΔP at the fan upstream side is in a low pressure loss region R_{L} less than a predetermined value ΔP₀, the flow of the cooling air is as shown in Figs. 18A and 18B. When the pressure loss ΔP at the fan upstream side is in a high pressure loss region R_{H} equal to or great than the predetermined value ΔP₀, the flow of the cooling air is as shown in Figs. 19A and 19B. (In Figs. 18A, 18B, 19A, and 19B, the right-and-left direction is shown so as to coincide with the fan axial-flow direction, and in Figs. 18A and 19A, only the lower side from the center line C_{L} of the fan is shown.)

That is, in the low pressure loss region R_{L}, an air quantity is relatively great. Therefore, as shown in Fig. 18A, a relatively great air quantity represented by vector F_{I,1} is generated at the fan upstream side in the axial direction. At the fan downstream side, a flow represented by vector F_{O,1} is generated. That is, the component in the axial-flow direction represented by vector F_{A},₁ is greater than the component in the centrifugal/revolving direction represented by vector F_{C,1}. And the air quantity becomes greater toward the centrifugal side, as indicated by vectors in Fig. 18B.

In the high pressure loss region R_{H}, an air quantity is relatively small. Therefore, as shown in Fig. 19A, a relatively small air quantity represented by vector F_{I,2} is generated at the fan upstream side in the axial direction. At the fan downstream side, a flow represented by vector F_{O,2} is generated. That is, the component in the centrifugal/revolving direction represented by vector F_{C,2} is greater than the component in the axial-flow direction represented by vector F_{A,2}. And the air quantity becomes greater toward the centrifugal side, as indicated by vectors in Fig. 19B.

The above-described relationship between the pressure loss ΔP at the fan upstream side and the flow of the cooling air at the fan downstream side has been confirmed by experiments and simulations.

In the above-described hydraulic shovel, the cooling package is thick and therefore the pressure loss ΔP at the fan upstream side is great. The cooling fan will be used in the high pressure loss region. Therefore, for the flow component of the cooling air at the fan outlet side,the componentin the centrifugal/revolving direction will become greater.

However, in the above-described prior art shown in Fig. 15, as described above, the discharge opening 111 consisting of a plurality of openings arranged in the form of a mesh is disposed at a position away from the fan 105 in the fan axial-flow direction and has a width in the fan axial-flow direction. Therefore, the cooling air introduced into the main engine room 102B is caused to flow in the axial-flow direction until it is discharged.

That is, in this prior art, the flow main component in the centrifugal/revolving direction is caused to flow in the axial-flow direction. For this reason, the pressure loss in the cooling air is relatively great, and consequently, the cooling air passed through the cooling package 104 cannot be smoothly discharged. Thus, there is a problem of the discharge efficiency being low.

To enhance the discharge efficiency, the area of the openings in the main engine room 102B can be increased. In this case, noise (leakage of engine sound, or leakage of air sound generated as the cooling air passes through the cooling package 104) will be increased, so that a new problem will arise.

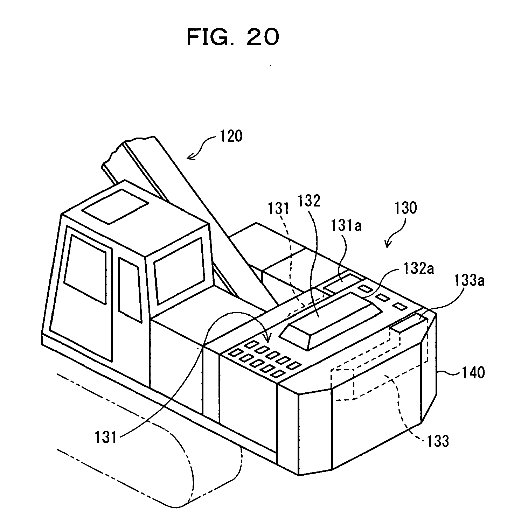

Hence, patent document 2 (Japanese Laid-Open Patent Publication No. 2001-193102) discloses a construction machine such as that shown in Fig. 20. In this construction machine, cooling-air passages (fan-air splitting flow passages and fan-air splitting ducts) 131 to 133 are formed in the top surface and side surfaces of an engine room 130. The inlets of the cooling-air passages 131 to 133 (the left ends in Fig. 20) are disposed in the vicinity of the outer periphery of the cooling fan. Such a structure is provided so that the cooling air discharged in the centrifugal/revolving direction from the cooling fan is efficiently discharged from a small number of openings, and so that an increase in noise from the engine room 130 is prevented.

However, the prior art of the aforementioned patent document 2 shown in Fig. 20 has the following problems.

That is, the side surfaces of the engine room 130 are provided with the cooling-air passages 131, 133, so when attaching the cooling-air passages 131, 133 to the outside of the engine room 130 as shown in Fig. 20, it is necessary to provide space for the cooling-air passage 131 on the front side of the engine room and to arrange a counterweight 140 on the rear side. For this reason, there is a possibility that a size increase and structural intricacy of the construction machine will be caused. On the other hand, if the cooling-air passages 131, 133 on the side surfaces of the engine room 130 are attached to the inside of the engine room 130, an increase in the size of the engine room 130 will be caused.

Also, as shown in Fig. 20, the discharge openings 131a, 133a of the cooling-air passages 131, 133 of the engine room side surfaces are formed in the top surface of the engine room 130 along with the discharge opening 132a of the cooling-air passage (duct) 132. The inlets of the cooling-air passages 131 to 133 are disposed near the cooling fan and engine that are noise making sources. For this reason, there is a possibility that noise will be concentrated above the engine room 130 through these cooling-air passages 131 to 133 and grow louder locally.

In addition, horizontal noise from a construction machine can be suppressed if a working site is enclosed with a shielding, for example. However, providing a shielding to suppress vertical noise is a large-scale operation and not practical. Part of horizontal noise can be absorbed by the ground, etc. However, there is no absorbing object for vertical noise, so the propagation range (distance and direction that vertical noise propagates) is very large. Because the discharge openings 131a, 133a are vertically open, noise will be vertically discharged through these discharge openings 131a, 133a.

The present invention has been made in view of the problems mentioned above. Accordingly, it is the primary obj ect of the present invention to provide an engine room structure and cooling system of a construction machine that are capable of enhancing the efficiency of cooling-air discharge and reducing noise, while suppressing a size increase and structural intricacy of the construction machine.

### DISCLOSURE OF THE INVENTION

To achieve the aforementioned object, there is provided an engine room structure in a construction machine which contains an engine, a cooling package, and a cooling fan for bringing (circulating) cooling air through said cooling package, and in which its internal space functions as a cooling-air passage, said engine room structure comprising:
a discharge opening formed on each of a top wall surface and a bottom wall surface of an engine room main body to discharge the cooling air brought (circulated) by the cooling fan, at least which formed on the top wall surface is disposed around an outer periphery of the cooling fan; and
an upper cooling-air deflecting member mounted on said top wall surface to cover said discharge opening so that said cooling air discharged from said discharge opening is deflected in a horizontal direction.

In the engine room structure of the present invention, a bottom guard of a construction machine, which faces the engine room and is mounted on the bottom portion of the engine room, can be equipped with a bottom guard main body and a guide member. The bottom guard main body is mounted on the bottom portion of the engine room so as to cover an opening formed in the bottom portion, and has a cooling-air discharge opening. With the bottom guard main body mounted on the bottom portion of the engine room, the guide member is installed on a side facing the interior of the engine room so as to cover the cooling-air discharge opening. The guide member is used to rectify the cooling fan discharged from the cooling fan and guide the cooling air from the outer periphery of the cooling fan to the cooling-air discharge opening.

In the engine room structure of the present invention, the discharge opening formed on the bottom wall surface is preferably disposed around the outer periphery of the cooling fan. Also, the engine room structure preferably includes a lower cooling-air deflecting member, which is mounted on the bottom wall surface to cover the discharge opening so that the cooling air discharged from the discharge opening is deflected in a horizontal direction.

Preferably, the engine room structure of the present invention further includes an cooling-air guiding member mounted on the engine room main body for guiding the cooling air deflected by at least one of the upper cooling-air deflecting member and the lower cooling-air deflecting member. The lower cooling-air guiding member is mounted on the bottom wall surface for guiding the cooling air deflected by the lower cooling-air deflecting member along the wall surface of the engine room.

In accordance with the present invention, there is provided a cooling system in a construction machine comprising:
a cooling-air passage formed by an internal space of an engine room;
a cooling fan disposed within the cooling-air passage to circulate cooling air;
a cooling package disposed within the cooling-air passage;
a discharge opening formed on each of a top wall surface and a bottom wall surface of an engine room main body to discharge the cooling air brought (circulated) by the cooling fan, at least which formed on the top wall surface is disposed around an outer periphery of the cooling fan; and
an upper cooling-air deflecting member mounted on the top wall surface to cover the discharge opening so that the cooling air discharged from the discharge opening is deflected in a horizontal direction.

In the cooling system of the present invention, a bottom guard of a construction machine, which faces the engine room and is mounted on the bottom portion of the engine room, can be equipped with a bottom guard main body and a guide member. The bottom guard main body is mounted on the bottom portion of the engine room so as to cover an opening formed in the bottom portion, and has a cooling-air discharge opening. With the bottom guard main body mounted on the bottom portion of the engine room, the guide member is installed on a side facing the interior of the engine room so as to cover the cooling-air discharge opening. The guide member is used to rectify the cooling fan discharged from the cooling fan and guide the cooling air from the outer periphery of the cooling fan to the cooling-air discharge opening.

In the cooling system of the present invention, the discharge opening formed on the bottom wall surface is disposed around the outer periphery of the cooling fan, and further comprising:
a lower cooling-air deflecting member mounted on the bottom wall surface to cover the discharge opening so that the cooling air discharged from the discharge opening is deflected in a horizontal direction.

Preferably, an cooling-air guiding member mounted on the engine roommain body for guiding the cooling air deflected by at least one of the upper cooling-air deflecting member and the lower cooling-air deflecting member. The upper cooling-air guiding member is mounted on the topwall surface for guiding the cooling air deflected by the upper cooling-air deflecting member. The lower cooling-air guiding member is mounted on the bottom wall surface for guiding the cooling air deflected by the lower cooling-air deflecting member along the wall surface of the engine room.

According to the present invention, most of the cooling air discharged from the cooling fan flows in the centrifugal direction of the cooling fan and is smoothly discharged out of the top wall surface of the engine room through the discharge opening disposed around the outer periphery of the cooling fan. Therefore, the efficiency of cooling-air discharge can be enhanced.

In addition, at the top wall surface of the engine room main body of the engine room, the cooling air from the discharge opening flows out of the engine room main body along the outside wall surface of the engine room main body in the horizontal direction by the cooling-air deflecting member. Similarly, the propagation direction of the engine sound that leaks to the outside through the spaces within the cooling-air deflecting members is deflected in the horizontal direction. Thus, noise is prevented from propagating in the vertical direction. In addition, discharging of the cooling air is performed at the top and bottom wall surfaces of the engine room main body, so noise is dispersed. Therefore, noise can be prevented from spreading in a large range and growing louder.

An enhancement in the efficiency of cooling-air discharge and a reduction in noise can be achieved while suppressing a size increase and structural intricacy of the construction machine, compared with the case where a system for discharging cooling air is attached to the side surface of the engine room main body.

By providing the cooling-air guiding member, the cooling air deflected by the cooling-air deflecting member is guided by the cooling-air guiding member. As a result, the engine sound to be transferred through the space formed by the cooling-air deflecting member and cooling-air guiding member is absorbed by the cooling-air guiding member, and the engine sound transmitted through the wall surface of the engine roommain body is intercepted by the cooling-air guiding member. Therefore, leakage of the engine sound, that is, noise can be reduced.

### BRIEF DESCRIPTION OF THE DRAWINGS

FIG. 1 is a side view showing a construction machine to which a first embodiment of the present invention is applied;
FIG. 2 is a perspective view showing a construction machine to which a first embodiment of the present invention is applied;
FIG. 3 is a transverse sectional view showing a cooling system constructed in accordance with the first embodiment of the present invention;
FIG. 4 is a perspective view showing the upper engine room discharge opening and upper bulge of the cooling system constructed in accordance with the first embodiment of the present invention;
FIG. 5 is a side view showing the revolving superstructure of the construction machine shown in FIG. 1;
FIG. 6 is a transverse sectional view showing how cooling air is introduced into the engine room and discharged from the engine room by the cooling system of the first embodiment;
FIG. 7 is a perspective view showing a construction machine to which a second embodiment of the present invention is applied;
FIG. 8 is a transverse sectional view showing a cooling system constructed in accordance with the second embodiment of the present invention;
FIG. 9 is a perspective view showing the upper engine room discharge opening and upper duct of the cooling system constructed in accordance with the second embodiment of the present invention;
FIG. 10 is a transverse sectional view showing how cooling air is introduced into the engine room and discharged from the engine room by the cooling system of the second embodiment;
FIG. 11 is a transverse sectional view showing a cooling system constructed in accordance with a third embodiment of the present invention;
FIG. 12 is a perspective view of the bottom guard shown in FIG. 11;
FIG. 13 is a transverse sectional view showing a modification of the cooling system of the present invention;
FIG. 14 is a perspective view showing a conventional construction machine;
FIG. 15 is a transverse sectional view showing the engine room of the conventional construction machine shown in FIG. 14;
FIG. 16A is a schematic diagram used to explain the relationship between the size of an engine room and the thickness of a cooling package in the cooling system of a construction machine, the engine roombeing relatively narrow;
FIG. 16B is a schematic diagram used to explain the relationship between the size of an engine room and the thickness of a cooling package in the cooling system of another construction machine, the engine room being relatively wide;
FIG. 17 is a schematic diagram showing the performance curve of a typical axial cooling fan;
FIGS. 18A and 18B are schematic diagrams showing how cooling air flows before and after the cooling fan when pressure loss at the fan upstream side is relatively small;
FIGS. 19A and 19B are schematic diagrams showing how cooling air flows before and after the cooling fan when pressure loss at the fan upstream side is relatively great; and
FIG. 20 is a perspective view showing the cooling system of a conventional construction machine.

### BEST MODE FOR CARRYING OUT THE INVENTION

Embodiments of the present invention will hereinafter be described with reference to the drawings.

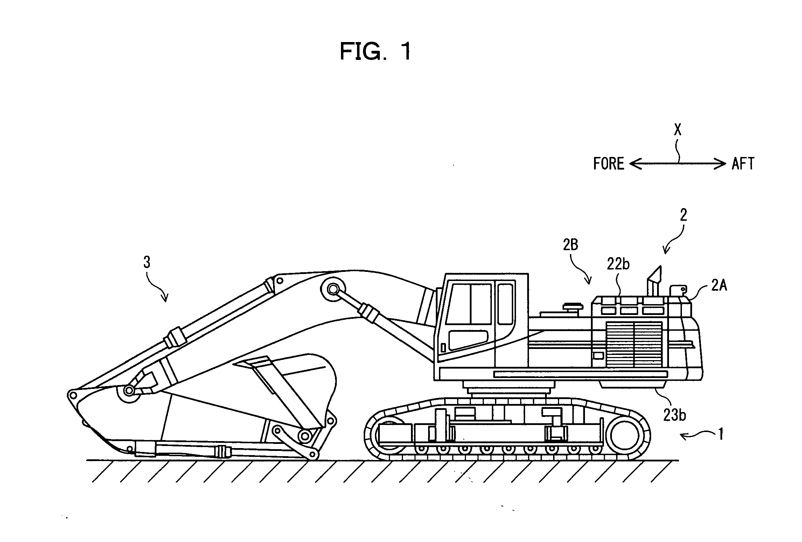

In Figs. 1 to 13, an arrow X indicates the fore-and-aft direction of a construction machine (also referred to as an engine room width direction), and an arrow Y indicates the right-and-left direction of the construction machine (also referred to as a fan axial-flow direction).

Also, in the following embodiments, a description will be given in the case where a cooling system in a construction machine of the present invention is applied to a hydraulic shovel (construction machine).

### (1) First Embodiment

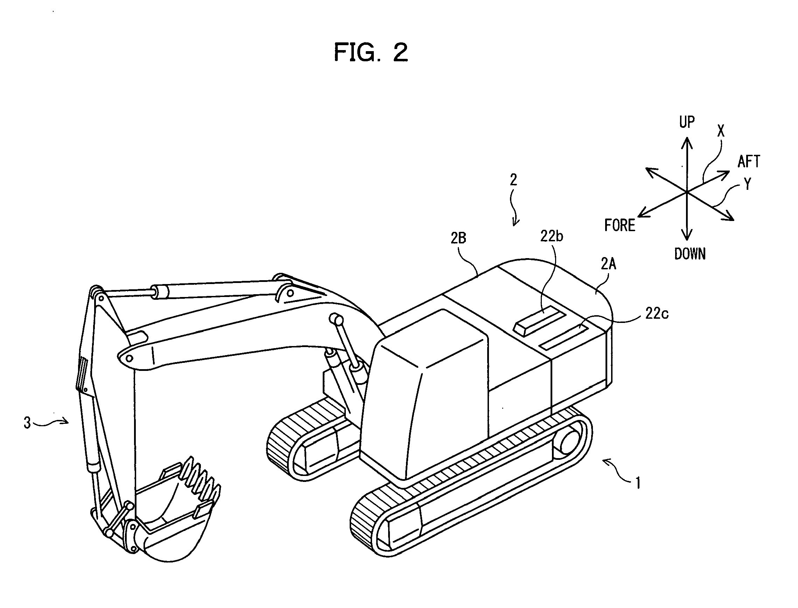

Initially, a construction machine equipped with a cooling system as a first embodiment of the present invention will be described with reference to Figs. 1 and 2. The figures show the entire construction machine according to the first embodiment of the present invention. Fig. 1 is a side view of the construction machine and Fig. 2 is a perspective view thereof.

The construction machine in this embodiment is a large hydraulic shovel and is made up of a travel base 1, a revolving superstructure 2 revolvably disposed on the travel base 1, and an operating arm 3 extending from the revolving superstructure 2 to perform various operations. The revolving superstructure 2 includes a counterweight 2A disposed at its rear end, and an engine room 2B disposed in front of the counterweight 2A.

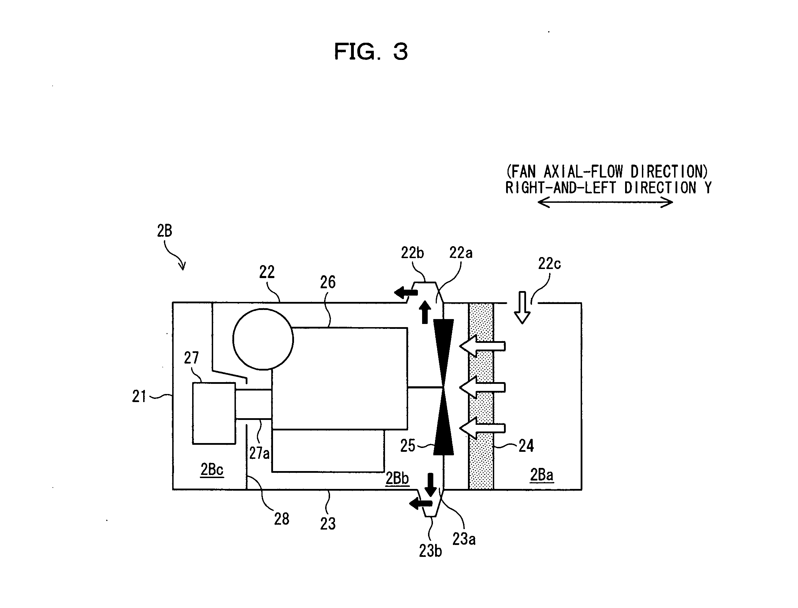

Next, the engine room 2B in the first embodiment of the present invention will be described with reference to Fig. 3. In the engine room 2B, an engine 26 is installed so its crank shaft is in the right-and-left direction Y, and an axial cooling fan 25 is disposed to the right side of the engine 26. The cooling fan 25 is installed so its axial direction coincides with the right-and-left direction Y, and is used to deliver cooling air into a cooling-air passage defined by the interior space of the engine room 2B. In the embodiment shown in Fig. 3, cooling air is delivered toward the left side. The cooling fan 25 shown in Fig. 3 is an engine-driven type mechanically coupled with the engine crank shaft, but may be a hydraulic type.

A cooling package 24, such as a radiator, an oil cooler, etc., is installed on the upstream side (right side) in the axial-flow direction of the cooling fan 25. Also, a hydraulic pump 27 is mechanically coupled with the engine crank shaft and is installed on the downstream side (left side) in the axial-flow direction of the cooling fan 25.

The interior of the engine room 2B is partitioned by the cooling package 24, engine 26, and hydraulic pump 27. That is, the interior of the engine room 2B is divided into a radiator room 2Ba where the radiator (coolingpackage 24) is installed, a main engine room 2Bb where the engine 26 and cooling fan 25 are installed, and a pump room 2Bc where the hydraulic pump 27 is installed.

An engine room main body 21 constituting the engine room 2B has a top wall surface 22 and a bottom wall surface 23. The top wall surface 22 facing the radiator room 2Ba is provided with an introduction opening 22c, and the top wall surface 22 and bottom wall surface 23 facing the main engine room 2Bb are provided with discharge openings 22a and 23a, respectively. Air (cooling air) is introduced into the interior of the engine room 2B through the introduction opening 22c by the cooling fan 25 and is passed through the cooling package 24. Thereafter, the cooling air is discharged out of the engine room main body 21 through the engine room discharge openings 22a, 23a. The cooling air cools cooling water and the working oil of the hydraulic pump 27 when passing through the cooling package 24.

Note that the cooling air introduced into the engine room 2B flows slightly into the pump room 2Bc through the gap between the connecting rod 27a (which extends between the engine 26 and hydraulic pump 27) and the partition wall 28 (which is disposed between the main engine room 2Bb and pump room 2Bc).

Thus, the cooling system of the present invention is made up of the introduction opening 22c, the cooling-air passage (chambers 2Ba, 2Bb, and 2Bc within the engine room main body 21), the cooling package 24, the cooling fan 25, and the discharge openings 22a and 23a.

The discharge openings 22a and 23a are disposed around the outer periphery of the cooling fan 25. That is, they are disposed at the same position as the cooling fan 25 (or at approximately the same position as the cooling fan 25) with respect to the fan axial-flow direction (right-and-left direction) Y. In the first embodiment shown in Fig. 3, the openings 22a and 23a are positioned directly below the cooling fan 25 with respect to the fan axial-flow direction Y.

In the cooling system of the first embodiment, an upper bulge 22b (which is an upper cooling-air deflecting member) is further mounted on the outside of the top wall surface 22 so as to cover the upper engine room discharge opening 22a. Similarly, a lower bulge 23b (which is a lower cooling-air deflecting member) is further mounted on the outside of the bottom wall surface 23 so as to cover the lower engine room discharge opening 23a.

In each of the bulges 22b and 23b, the upstream end on the side of the radiator room 2Ba is closed, while the downstream end on the side of the pump room 2Bc is open. The cooling air, discharged from the engine room 2B through the engine room discharge openings 22a and 23a, is deflected in the horizontal direction (or in approximately the horizontal direction) and the direction opposite to the cooling-air introduction opening 22c with respect to the fan axial-flow direction Y (i.e., the direction away from the cooling-air introduction opening 22c) by the bulges 22b and 23b and is discharged out of the engine room main body 21.

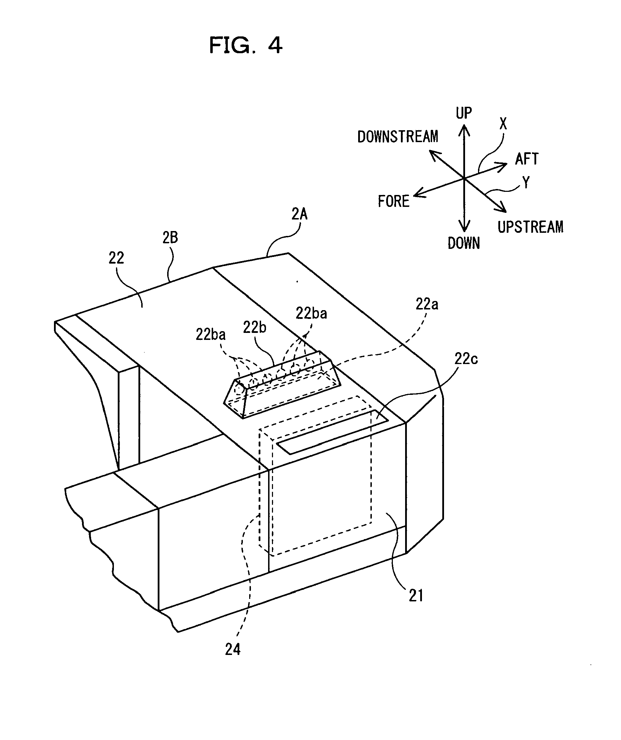

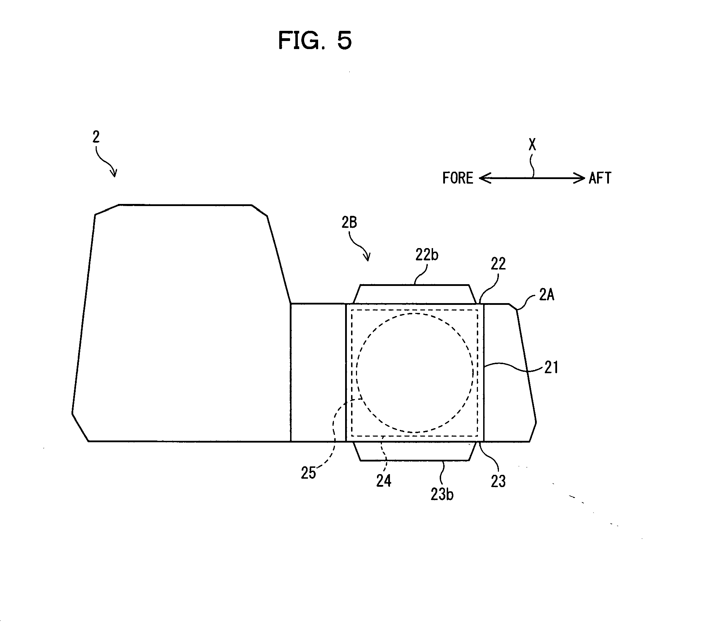

Now, the cooling-air introduction opening 22c, engine room discharge openings 22a, 23a, and bulges 22b, 23b will be described in further detail with reference to Figs. 4 and 5.

Figs. 4 and 5 show the structure of the upper portion of the engine room 2B. Fig. 4 is a perspective view of the upper portion of the engine room 2B and Fig. 5 is a side view thereof.

Because the upper engine room discharge opening 22a and upper bulge 22b of the top wall surface 22 are the same as the lower engine room discharge opening 23a and upper bulge 23b of the bottom wall surface 23 in structure, a detailed description will be given of the upper engine room discharge opening 22a and upper bulge 22b.

As shown in Fig. 4, the cooling-air introduction opening 22c and engine roomdischarge opening 22a are formed as slit-shaped openings, which are long in the fore-and-aft direction (also referred to as the engine room width direction) X. The bulge 22b is in the form of approximately a box long in the engine room width direction X. With the bulge 22b mounted on the top wall surface 22, the bulge 22b is open to the engine room discharge opening 22a, and the downstream end in the fan axial-flow direction Y of the bulge 22b has a plurality of openings 22ba (discharge holes) relatively short in the engine room width direction X (e.g., circular openings in this example), which are juxtaposed along the engine room width direction X.

Note that a plurality of partition plates extending in the right-and-left direction Ymaybe provided between discharge holes 22ba. With these partition walls, the cooling air from the engine room discharge opening 22a is prevented from flowing in the engine room width direction X and can flow smoothly toward the discharge holes 22ba. Therefore, the back pressure of the cooling air can be reduced.

Instead of having discharge holes 22ba, the downstream end of the bulge 22b may have an opening relatively long in the engine room width direction X. As with the aforementioned case, partition plates may be provided so the inside of the bulge 22b is divided in the engine room width direction X.

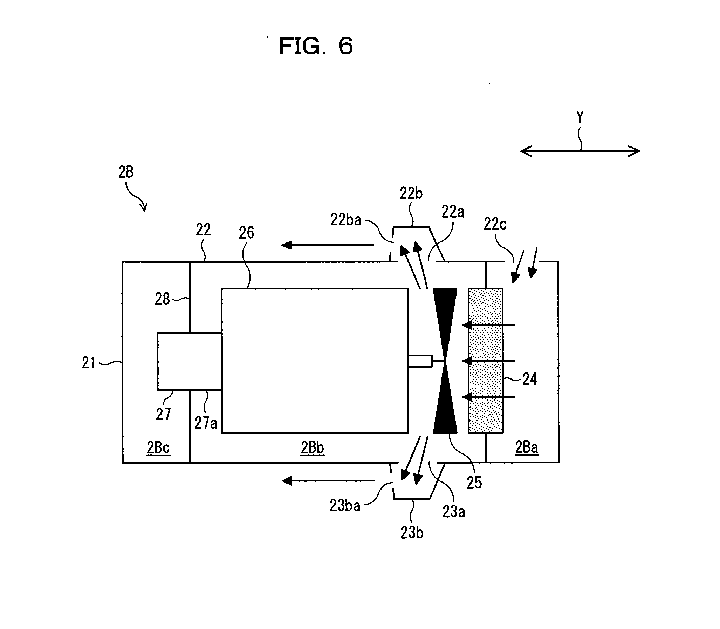

Since the engine room structure and cooling system of the first embodiment of the present invention are constructed as described above, cooling air is discharged out of the engine room main body 21, as shown by arrows in Fig. 6.

That is, as previously indicated, the pressure loss at the cooling package 24 is relatively great, so the cooling air sent out of the cooling fan 25 has an air quantity and directions represented by vectors. The main components of the flow of the cooling air sent out of the cooling fan 25 are the components in the centrifugal/revolving direction. That is, most of the cooling air sent out of the cooling fan 25 will flow in approximately the centrifugal direction, as indicated by vectors. Hence, in the cooling system of the first embodiment, the engine room discharge openings 22a and 23a are formed in portions of the top and bottom wall surfaces where the cooling air strikes. Therefore, the cooling air sent out of the cooling fan 25 is smoothly discharged from the engine room 2B through the engine room discharge openings 22a and 23a without undergoing direct resistance. Thus, the efficiency of cooling-air discharge can be enhanced.

As a result, the open area of the engine room 2B can be reduced, whereby leakage of engine sound and air sound generated as cooling air passes through the cooling package 24 (hereinafter referred to as engine sound), that is, leakage of engine noise can be suppressed. In addition, since the pressure loss of the cooling air can be reduced, costs can be reduced by relaxing specifications for the cooling fan 25. Furthermore, the efficiency for cooling-air discharge is enhanced, so even if the cooling fan 25 of the same specifications is used, the air quantity can be increased and specifications for the heat exchange area of the cooling package 24 can be relaxed.

And the cooling air discharged out of the engine room 2B through the engine room discharge openings 22a and 23a is deflected in the horizontal direction by the bulges 22b and 23b. Similarly, the engine sound from the bulges 22b and 23b is deflected in the horizontal direction .

Horizontal noise from a construction machine can be suppressed if a working site is enclosed with a shielding, for example. However, providing a shielding to suppress vertical noise is a large-scale operation and notpractical. In addition, part of the noise horizontally generated is absorbed by buildings, the ground, etc., but since there is no object to absorb noise vertically generated, the propagation range (distance and direction that vertical noise propagates) is very large.

Therefore, if the propagation direction of noise is deflected in the horizontal direction, the propagation range can be narrowed (spreading of noise can be suppressed).

In the prior art disclosed in the aforementioned patent document 2, as described above, the discharge openings 131a and 133a of the cooling-air passages 131 and 133 of the engine room side surfaces are formed in the engine room top surface along with the discharge opening 132a of the cooling-air passage 132, so there is a possibility that noise will be concentrated above the engine room and grow louder locally. In addition, since the cooling-air passages 131 and 133 are provided on the engine room side walls, it is necessary to install the counterweight 140 and to provide space on the working-oil tank side. Therefore, there is a possibility that a size increase and structural intricacy of the construction machine will be caused.

In contrast to this, the engine room structure and cooling system of the first embodiment have the discharge openings (bulge discharge openings) 22ba and 23ba in the top wall surface 22 and bottom wall surface 23 of the engine room 2B. Therefore, since noise is dispersed above and below the engine room 2B, noise can be kept from growing louder locally.

Also, in the engine room structure and cooling system of the first embodiment, the lower bulge 23b is provided on the outside of the bottom wall of the engine room 2B. Particularly, as shown Fig. 1, in large construction machines, there is a wide space between the travel base 1 and the revolving superstructure 2. In the engine room structure and cooling system of the first embodiment, this space is efficiently utilized. Therefore, the size of the construction machine can be reduced compared with the prior art disclosed in the aforementioned patent document 2. Since the engine room main body 21 is provided with only the openings 22a and 23a and bulges 22b and 23b, the construction machine can be made structurally simple compared with the prior art disclosed in the aforementioned patent document 2.

### (2) Second Embodiment

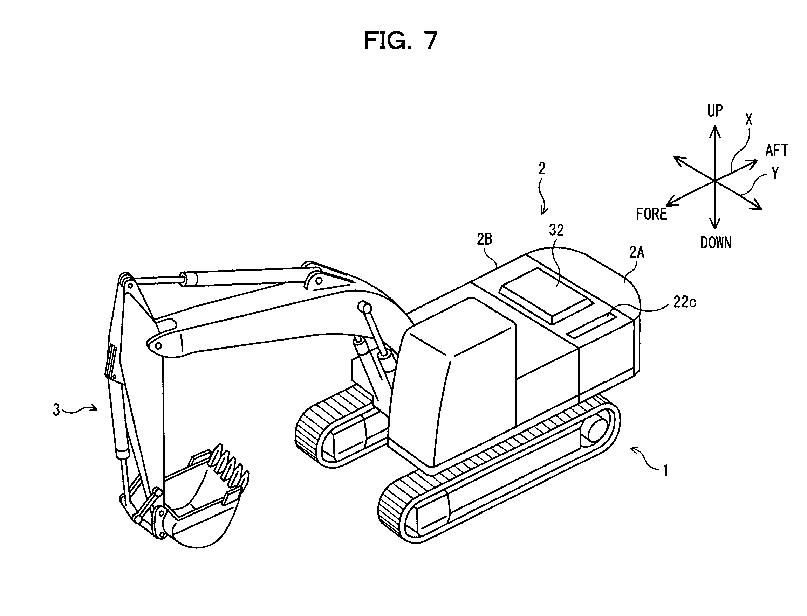

Figs. 7 to 10 show an engine room structure and a cooling system in accordance with a second embodiment of the present invention. In the figures, the same reference numerals will be applied to the same parts as the first embodiment of Figs. 1 to 6. Therefore, a detailed description of the same parts will be omitted unless particularly necessary.

A construction machine that can be equipped with the engine room structure and cooling system of the second embodiment is a large hydraulic shovel, as with the first embodiment. As shown in Fig. 7 which is a perspective view, it is made up of a travel base 1, a revolving superstructure 2, and an operating arm 3.

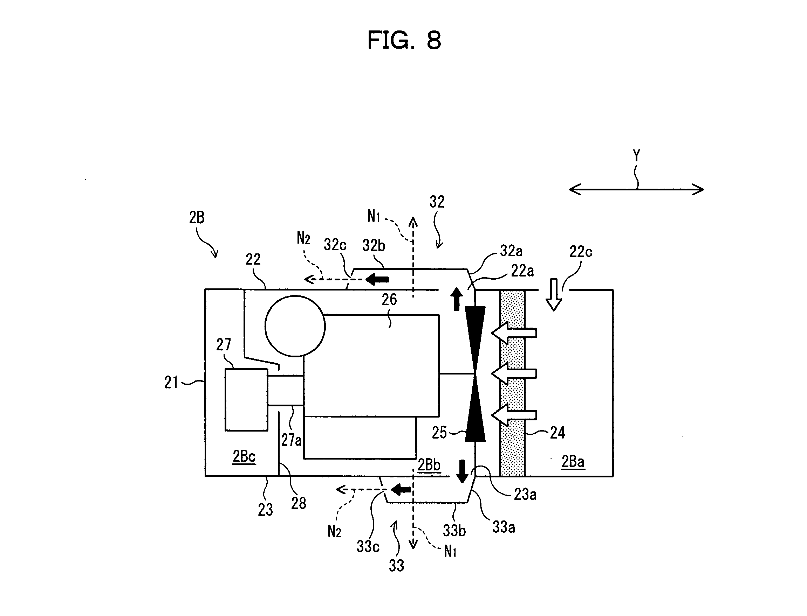

An engine room 2B within the revolving superstructure 2 is constructed as shown in Fig. 8 which is a transverse sectional view and includes a cooling-air introduction opening 22c, cooling-air passages 2Ba, 2Bb, and 2Bc defined by the interior space of the engine room 2B, a cooling package 24, a cooling fan 25, and engine room discharge openings 22a and 23a. The engine room 2B further includes an upper duct 32 provided for 22c, 2Ba, 2Bb, 2Bc, 24, 25, 22a, and 23a, and a lower duct 33 provided for the engine room discharge openings 22a and 23a. These components constitute the cooling system of the second embodiment of the present invention.

The upper and lower ducts 32, 33 are used instead of the upper and lower bulges 22b and 23b mounted so as to cover the engine room discharge openings 22a and 23a of the first embodiment. The upper duct 32 is mounted on the outside of a top wall surface 22 to cover the upper engine room discharge opening 22a so that its upstream end is approximately aligned with the upstream end of the upper engine room discharge opening 22a. Likewise, the lower duct 33 is mounted on the outside of a bottom wall surface 23 so as to cover the lower engine room discharge 23a.

In each of the upper and lower ducts 32 and 33, as with the upper and lower bulges 22b, 23b of the first embodiment, an upstream end near the radiator room 2Ba is closed, while a downstream end near the pump room 2Bc is open. Part of the engine sound is transmitted through the top wall surface 22 and bottom wall surface 22 in the directions indicated by arrows N₁, N₁ of Fig. 8, but the transmitted engine sound is attenuated by the wall surfaces of the upper and lower ducts 32, 33. That is, the engine sound propagating in the directions indicated by arrows N₁, N₁ is attenuated by two wall surfaces, the top and bottom wall surfaces 22, 23 of the engine room main body 21 and the wall surfaces of the upper and lower duct 32, 33. This structure is called a double deck structure.

The engine sound also propagates through the spaces formed between the ducts 32, 33 and the top and bottom wall surfaces 22, 23 in the horizontal direction indicated by arrows N₂, N₂, but the engine sound is absorbed and attenuated by the interior wall surfaces of the upper and lower ducts 32, 33. The length in the fan axial-flow direction Y of each of the upper and lower ducts 32, 33 (i.e., the axial length from the upstream end of each duct to the downstream end) is set so that the effect of reducing the engine sound by the interior wall surfaces of the upper and lower ducts 32, 33 is sufficiently obtained (e.g., so that the engine sound becomes smaller than a predetermined value).

With the mounting of the upper and lower ducts 32, 33, the cooling air discharged from the engine room 2B through the engine room discharge openings 22a, 23a is deflected by the upstream portions 32a, 33a of the upper and lower ducts 32, 33 so that it flows in the horizontal direction along the top and bottom wall surfaces 22, 23. Thereafter, while the horizontal flow is being guided along the top and bottom wall surfaces 22, 23 by the duct downstream portions 32b, 33b, the cooling air is discharged out of the engine roommain body 21. Thus, the duct upstream portions 32a, 33a constitute the cooling-air deflecting members of the present invention, and the duct downstream portions 32b, 33b constitute the cooling-air guiding members of the present invention.

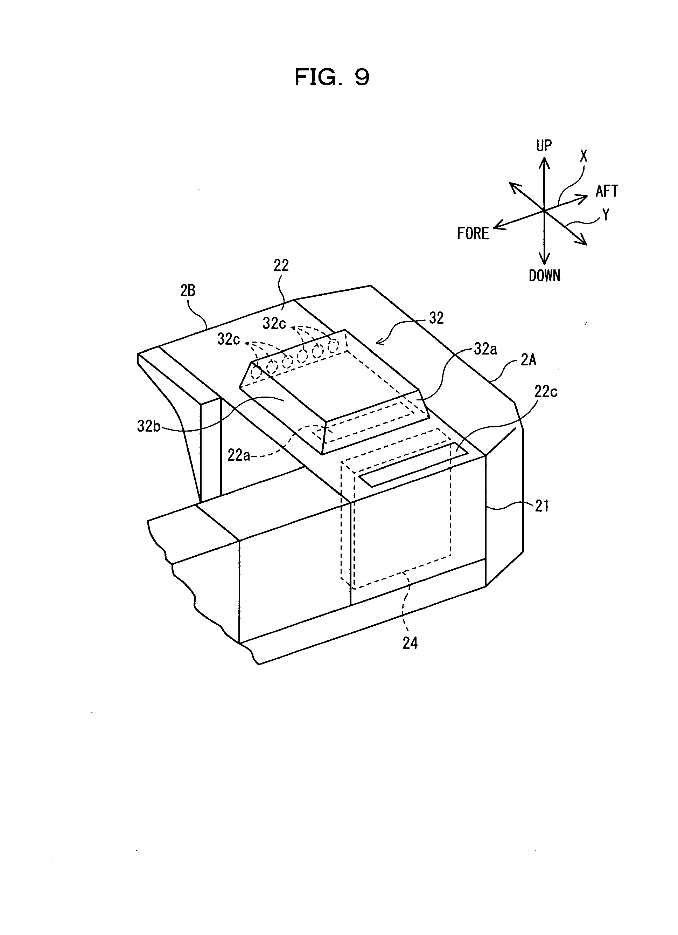

Now, the duct structure will be described in further detail with reference to Fig. 9 where the upper structure of the engine room 2B is shown. Because the upper duct 32 and the peripheral structure are the same as the lower duct 33 and the peripheral structure, a detailed description will be given of the upper duct 32 and the peripheral structure.

As shown in Fig. 9, the engine room discharge opening 22a in the engine room 2B is formed as a slit-shaped opening, which is long in the engine room width direction X. The upper duct 32 is in the form of approximately a box. With the upper duct 32 mounted on the top wall surface 22, the upper duct 32 is open to the engine room discharge opening 22a, and the downstream end in the fan axial-flow direction Y of the upper duct 32 has a plurality of openings 32c relatively short in the engine room width direction X (e.g., circular openings in this example), which are juxtaposed along the engine room width direction X.

Also, as previously described, the length in the fan axial-flow direction Y of each of the upper and lower ducts 32, 33 is made much greater than that of each of the upper and lower bulges 22b, 23b of the first embodiment.

Since the remaining structure is the same as the first embodiment, a description of the same parts will be omitted.

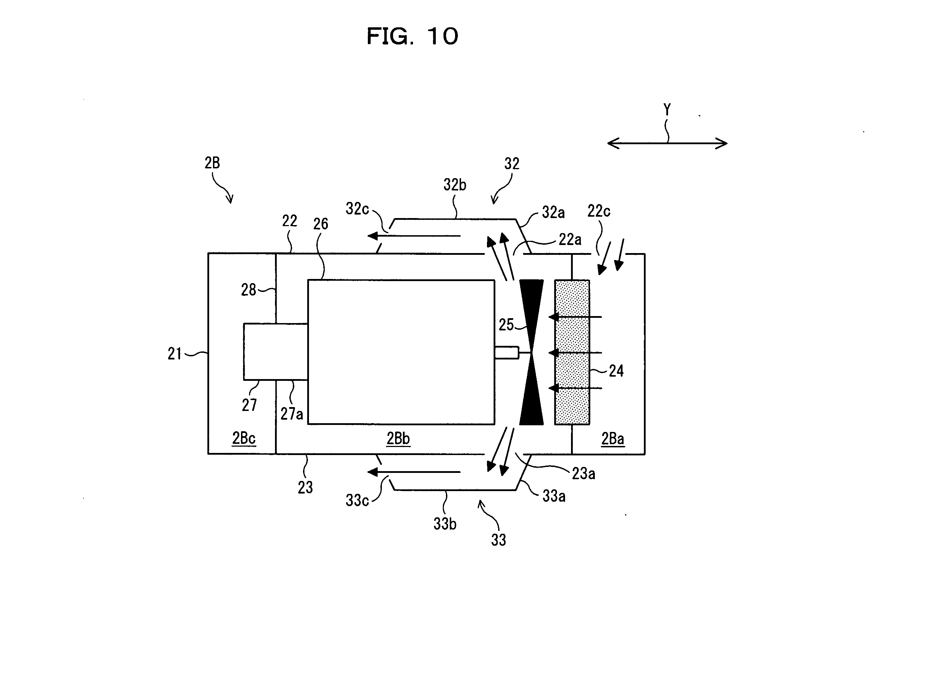

Since the engine room structure and cooling system of the second embodiment of the present invention are constructed as described above, cooling air is discharged out of the engine room main body 21, as shown by arrows in Fig. 10. That is, the cooling air sent out of the cooling fan 25 has an air quantity and directions represented by vectors. Most of the cooling air sent out of the cooling fan 25 flows in the centrifugal direction, as indicated by vectors. Therefore, the cooling air is efficiently discharged from the engine room 2B through the engine room discharge openings 22a, 23a disposed in approximately the same position as the cooling fan 25 with respect to the fan axial-flow direction Y.

The engine room structure and cooling system of the second embodiment have the following advantages in addition to the advantages of the first embodiment.

That is, part of the engine sound is transmitted through the top wall surface 22 and bottom wall surface 23 in the directions indicated by arrows N₁, N₁ of Fig. 8, but the transmitted engine sound is intercepted and attenuated by the wall surfaces of the upper and lower ducts 32, 33. At the same time, the engine sound propagates through the spaces formed within the ducts 32, 33 in the horizontal direction indicated by arrows N₂, N₂, but the engine sound is absorbed and attenuated by the interior wall surfaces of the upper and lower ducts 32, 33 and portions of the top and bottom wall surfaces 22, 23.

Therefore, as with the first embodiment, leakage of the engine sound can be effectively suppressed with a simple construction efficiently utilizing the space under the revolving superstructure 2 not used in prior art.

### (3) Third Embodiment

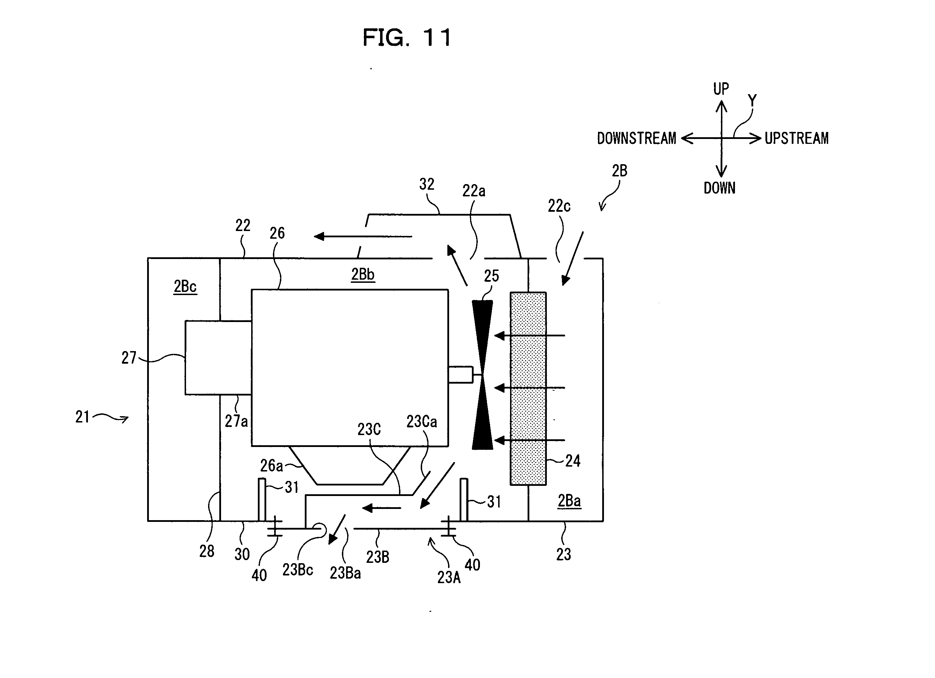

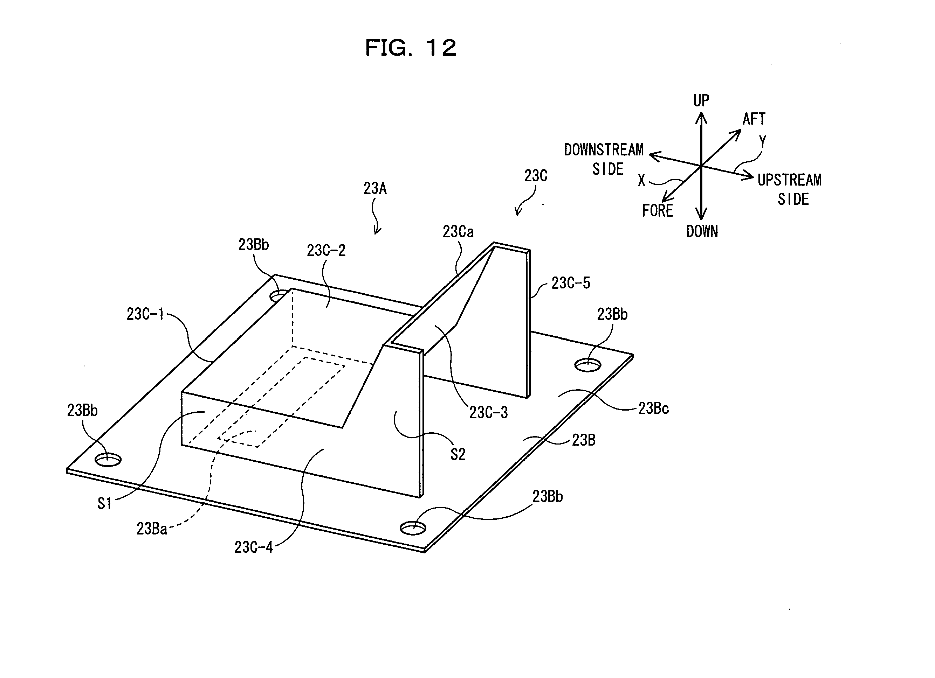

Figs. 11 to 12 show an engine room structure and a cooling system in accordance with a third embodiment of the present invention. Fig. 11 shows a transverse sectional view of the entire structure and Fig. 12 shows a perspective view of the bottom guard shown in Fig. 11. In the figures, the same reference numerals will be applied to the same parts as the first and second embodiments of Figs. 1 to 10. Therefore, a detailed description of the same parts will be omitted.

A construction machine that can be equipped with the engine room structure and cooling system of the third embodiment is a small construction machine where the gap between the revolving superstructure and the travel base is narrow. For this reason, it is difficult to mount a bulge or duct on the outside of the bottom wall surface of the engine room, as in the first and second embodiments. Therefore, a bottom guard 23A, mounted on the oil pan within the engine room 2B to protect equipment within the engine room 2B from the stones or the like from the ground, is provided with a rectifying box (guide member) 23C.

The bottom guard 23A is detachably fixed on a swing frame 30 (i.e., a portion excluding the bottom guard 23A from a floor surface 23) between main rails 31, 31 by means of bolts 40. For example, when performing the maintenance of the oil pan 26a, the bottom guard 23A is removed from the swing from 30 and the maintenance operation is performed through the opening in the swing frame 30.

Note that the engine 26 and oil pan 26a are mounted on the main rails 31 through support members (not shown). Although the main rails and support members are not shown in Fig. 15 showing a conventional engine room, as the same engine 106 is mounted on the main rail, the engine is typically mounted on the main rails 31.

The bottom guard 23A is equipped with the rectifier 23C fixed on a bottom guard main body 23B. The bottom guard main body 23B is attached to the swing frame 30 so as to cover the opening formed in the swing frame 30, the other words, so as to protect equipment with the engine room 2B from outside and has an opening 23Ba.

The rectifier 23C is also mounted on the inside surface 23Bc of the bottom guard main body 23B. In the mounted state, the rectifier 23C is disposed under the oil pan 26a and between the main rails 31, 31. As described above, the engine 26 is mounted on the main rails 31, 31 through support members (not shown), and this space is provided in prior art. That is, the rectifier 23C is disposed by efficiently utilizing this space not used in prior art.

The configuration and position of the rectifier 23C are set so that when the rectifier 23C is mounted within the engine room main body 21, one end 23Ca (i.e., the top end of an inclined surface 23C-3 and top ends of side surfaces 23C-4, 23C-5 shown in Fig. 12) is disposed at the same position as the cooling fan 25 (or at approximately the same position as the cooling fan 25) with respect to the fan axial-flow direction Y and at a position a predetermined distance away from the cooling fan 25 in the radial direction. In this example, the one end 23Ca is disposed directly below the cooling fan 25 with respect to the fan axial-flow direction Y.

The bottom guard 23A will be described in further detail with reference to Fig. 12. The figure shows a perspective view of the bottom guard 23A. The arrows on the right side of the figure indicate the directions where the bottom guard 23A is mounted within the engine room main body 21.

The bottom guard main body 23B is a square plate member and has a cooling-air discharge opening 23Ba near its downstream end. The cooling-air discharge opening 23Ba is formed into a slit that is long in the engine room width direction X. Also, the four corners of the bottom guard main body 23B have holes 23Bb for inserting the aforementioned bolts 40, respectively.

The rectifier 23C is fixed on the bottom guard main body 23B so as to cover the cooling-air discharge opening 23Ba in the engine room width direction X and the fan axial-flow direction Y. In the mounted state on the swing frame 30, the rectifier 23C consists of a vertical surface 23C-1 disposed at its downstream end, a horizontal surface 23C-2 extending from the top end of the vertical surface 23C-1 in parallel with the bottom guard main body 23B, an inclined surface 23C-3 extending upward from the horizontal surface 23C-2 to the vicinity of the cooling fan 25, and side surfaces 23C-4, 23C-5 disposed in the engine room width direction X. The front side surface 23C-4 is the same as the rear side surface 23C-5 in shape. Each side surface has a first part S1 coupled with the surfaces 23C-1 to 23C-3, and a second part S2 extending upstream from the first part S1.

Since the remaining structure is the same as the second embodiment, a description of the same parts will be omitted.

In the engine room structure and cooling system of the third embodiment of the present invention, the upstream end 23Ca of the rectifier 23C of the bottom guard 23A is disposed in the direction where the cooling air flows in a floor surface (a bottom wall surface) 23. Therefore, the cooling air send out of the cooling fan 25 is guided to the cooling-air discharge opening 23Ba by the rectifier 23C without undergoing direct resistance. Thus, as with the first and second embodiments, the efficiency of cooling-air discharge can be enhanced.

In addition, noise is absorbed by the rectifier 23C and further absorbed by the bottom guard main body 23B. Thus, noise is intercepted twice by the rectifier 23C and bottom guard main body 23B.

Furthermore, the rectifier 23C is disposed in the space, defined by the oil pan 26a and main rails 31, 31, which is provided in prior art. Therefore, the above-described advantages are obtainable without increasing the size of the engine room 2B. In a small construction machine, as previously described, the gap between the revolving superstructure and the travel base is narrow, so it is difficult to mount a bulge or duct on the outside of the bottom wall surface of the engine room. Therefore, in small construction machines, it is preferable to use the bottom guard 23A equipped with the rectifier 23C, as in the third embodiment of the present invention.

In the third embodiment, the bottom guard 23 is fixed on the swing frame 30 by bolts, and during maintenance, the bottom guard 23 is completely removed from the swing frame 30. However, for example, the bottom guard 23 may be attached to the swing frame 30 through hinges so that it can open and close the opening formed in the swing frame 30.

In addition, partition plates may be provided so that the cooling-air passage between the bottom guard main body 23B and the rectifier 23c is divided in the engine room width direction X. With the partition plates, the cooling air is prevented from flowing in the engine room width direction X and flows smoothly to a cooling-air discharge opening. As a result, the back pressure of the cooling air can be reduced.

### (4) Others

While the present invention has been described with reference to the preferred embodiments thereof, the invention is not to be limited to the details given herein, but may be modified within the scope of the invention hereinafter claimed.

For example, in the first embodiment the upper and lower bulges 22b, 23b are mounted on the top wall surface 22 and bottom wall surface 23, and in the second embodiment the upper and lower ducts 32, 33 are mounted on the top wall surface 22 and bottom wall surface 23. However, the bulge may be mounted on one of the top and bottom wall surfaces 22, 23 and the duct may be mounted on the other wall surface.

In the aforementioned embodiments, the axial cooling fan 25 is used and the engine roomdischarge openings 22a, 23a are disposed at approximately the same position as the cooling fan 25 with respect to the fan axial-flow direction Y. However, the cooling fan 25 may be a centrifugal fan and the engine room discharge openings 22a, 23a can be disposed around the outer periphery of the cooling fan (i.e., at the same position as the cooling fan 25 with respect to the fan axial-flow direction Y).

The cooling air entering the engine room 2B flows slightly into the pump room 2Bc through the gap between the connecting rod 27a and the partition wall 28. For this reason, an auxiliary opening may be formed in the wall surface of the engine room main body 21 facing the pump room 2Bc so the cooling air in the pump room 2Bc can be discharged out of the engine room main body 21.

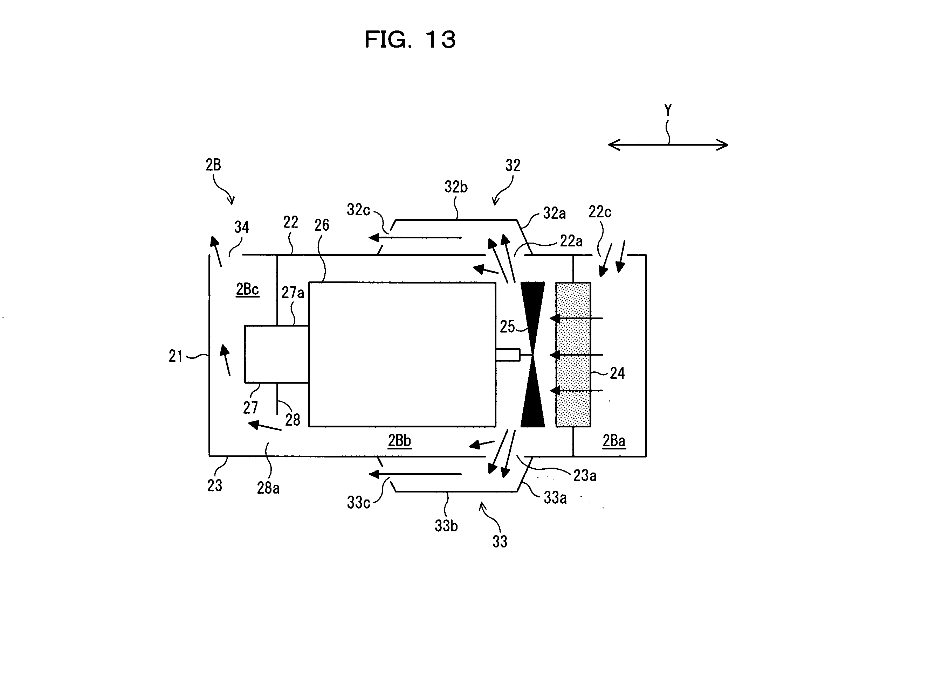

As shown in Fig. 13, the cooling air entering the main engine room 2Bb may be discharged through the pump room 2Bc, by forming an outlet 34 in the wall surface 22 of the engine room main body 21 facing the pump room 2Bc and also forming an opening 28a in the partition wall 28 between the pump room 2Bc and main engine room 2Bb.

Note that in the example shown in Fig. 13, the partition wall 28 is disposed between the outlet 34 in the pump room 2Bc and the engine 26. With this arrangement, leakage of the engine sound through the opening 28a and outlet 34 can be suppressed by the partition wall 28.

## Claims

1. An engine room structure in a construction machine which contains an engine (26), a cooling package (24), andacoolingfan (25) for bringing cooling air through said cooling package (24), and in which its internal space functions as a cooling-air passage, said engine room structure comprising:
a discharge opening (22a or 23a) formed on each of a top wall surface (22) and a bottom wall surface (23) of an engine room main body (21) to discharge the cooling air brought by the cooling fan (25), at least which formed on the top wall surface (22) is disposed around an outer periphery of the cooling fan (25); and
an upper cooling-air deflecting member (22b or 32a) mounted on said top wall surface (22) to cover said discharge opening (22a) so that said cooling air discharged from said discharge opening (22a) is deflected in a horizontal direction.

2. The engine room structure as set forth in claim 1, whereinsaiddischargeopening (23a) formed on the bottom wall surface (23) is disposed around the outer periphery of said cooling fan (25), and further comprising:
a lower cooling-air deflecting member (23b or 33a) mounted on said bottom wall surface (23) to cover said discharge opening (23a) so that said cooling air discharged from said discharge opening (23a) is deflected in a horizontal direction.

3. The engine room structure as set forth in claim 1 or 2, further comprising:
a cooling-air guiding member (32b or 33b) mounted on said engine room main body (21) for guiding said cooling air deflected by at least one of said upper cooling-air deflecting member (32a) and said lower cooling-air deflecting member (33a).

4. A cooling system in a construction machine comprising:
a cooling-air passage formed by an internal space of an engine room (2B);
a cooling fan (25) disposed within said cooling-air passage to circulate cooling air;
a cooling package (24) disposed within said cooling-air passage;
an discharge opening (22a or 23a) formed on each of a top wall surface (22) and a bottom wall surface (23) of an engine room main body (21) to discharge the cooling air circulated by the cooling fan (25), at least which formed on the top wall surface (22) is disposed around an outer periphery of the cooling fan (25); and
an upper cooling-air deflecting member (22b or 32a) mounted on said top wall surface (22) to cover said discharge opening (22a) so that said cooling air discharged from said discharge opening (22a) is deflected in a horizontal direction.

5. The cooling system as set forth in claim 4, wherein said discharge opening (23a) formed on the bottom wall surface (23) is disposed around the outer periphery of said cooling fan (25), and further comprising:
a lower cooling-air deflecting member (23b or 33a) mounted on said bottom wall surface (23) to cover said discharge opening (23a) so that said cooling air discharged from said discharge opening (23a) is deflected in a horizontal direction.

6. The cooling system as set forth in claim 4 or 5, further comprising:
a cooling-air guiding member (32b or 33b) mounted on said engine room main body (21) for guiding said cooling air deflected by at least one of said upper cooling-air deflecting member (32a) and said lower cooling-air deflecting member (33a).
